(19) Europäisches Patentamt
European Patent Office
Office européen des brevets

(11) **EP 4 234 646 B1**

(12) **EUROPEAN PATENT SPECIFICATION**

(45) Date of publication and mention
of the grant of the patent:
**05.11.2025 Bulletin 2025/45**

(21) Application number: **23178645.0**

(22) Date of filing: **15.01.2016**

(51) International Patent Classification (IPC):
**C09D 5/08** *(2006.01)*       **C09D 5/00** *(2006.01)*

(52) Cooperative Patent Classification (CPC):
**C09D 5/084; C09D 5/00; C09D 7/62;** C08K 9/04

(54) **AQUEOUS CORROSION RESISTANT COATINGS WITH SURFACE-HYDROPHOBIC INORGANIC PARTICLES**

WÄSSRIGE KORROSIONSBESTÄNDIGE BESCHICHTUNGEN MIT ANORGANISCHEN PARTIKELN MIT HYDROPHOBER OBERFLÄCHE

REVÊTEMENTS AQUEUX RÉSISTANT À LA CORROSION COMPRENANT DES PARTICULES INORGANIQUES À SURFACE HYDROPHOBE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2015 US 201562105241 P**

(43) Date of publication of application:
**30.08.2023 Bulletin 2023/35**

(62) Document number(s) of the earlier application(s) in accordance with Art. 76 EPC:
**16701402.6 / 3 247 750**

(73) Proprietor: **The Chemours Company FC, LLC Wilmington DE 19801 (US)**

(72) Inventors:
• **SHAN, Guobin**
  **Wilmington, 19809 (US)**
• **DIEBOLD, Michael Patrick**
  **Wilmington, 19810 (US)**

(74) Representative: **Abitz & Partner et al**
**Postfach 86 01 09**
**81628 München (DE)**

(56) References cited:
WO-A1-01/23480          WO-A1-2008/145533
WO-A2-2008/030311       US-A1- 2007 027 232

• **DATABASE WPI Week 201010, Derwent World Patents Index; AN 2009-Q31442, XP002755420**

**Description**

FIELD OF THE INVENTION

This invention relates to the field of polymeric coatings with enhanced anticorrosive properties.

BACKGROUND

Substrates, such as metals, woods, and cements, come in contact with many corrosive substances including water, salt, oxygen and/or industrial chemicals. For example, rust occurs quickly when metals are stored in humid environments resulting in the failure of metal equipment, rusting of ships, and the failure of buildings and bridges. Anticorrosive coatings are placed on metals to inhibit corrosion. First types of anticorrosive coatings use special alloys, or strong oxidizing agents (such as chromate, nitrite, molybdate, and orthophosphate), so as to passivate metal surfaces and inhibit corrosion. Second types of anticorrosive coatings include electrochemically reactive materials that are applied to metal surfaces enabling sacrificial protection. Third types of anticorrosive coatings use polymers and additives that when applied to a metal surface form barriers preventing water and oxygen from reaching the surface of a metal substrate. Sometimes metal objects are simply designed to inhibit corrosion by having smooth surface that are less likely to be damaged.

Preferred anticorrosion coatings will have 1) great wet/ dry adhesion so that the coating stays in contact with a substrate; 2) low conductivity that prevents ion & electron motion in coatings; 3) great barrier effects that reduce the transfer of ions, water, and oxygen through coatings; 4) highly stable polymers that do not break down as a result of environmental stresses such as UV radiation, thermal radiation, and water; and 5) components that are compatible, easy to mix, simplifying the process of making coatings. Inorganic particles are widely used in such polymeric coatings providing multiple functions such as opacity, pigment, color, extender, mechanic intensity, scrub resistance. Most, if not all aqueous coatings incorporate inorganic pigment having hydrophilic surfaces compatible with water to enhance the dispersibility of the inorganic pigment in aqueous coatings but reduce corrosion resistance and water resistance of the coating. WO 2008/030311 A2 describes a process for making organosilicon compound surface-treated titanium dioxide pigments, involving aqueous treatment with alkyltrialkoxysilanes and dialkyldialkoxysilanes at mildly acidic pH values and in the presence of a monoprotic acid. WO 2008/145533 A1 relates to a method for producing insulating coatings by drying aqueous coating compounds containing binders, fillers, and optionally further additives, at a temperature between 80 and 250°C, characterized in that the aqueous coating compounds comprise one or more hydrophobized silicic acids. US 2007/027232 A1 describes water-based coating compositions including a binder; a plurality of hydrophobic silica particles; and a solvent.

In addition, many corrosion resistant coatings include anticorrosive additives including amines, hydrazines, zinc phosphates, hexavalent chromium, and lead red. However, these inhibitors are expensive and pollute the environment. The applications of these additives are highly regulated by strict environmental regulations. Consequently, a commercial need exists to create better, environmentally friendly corrosion resistant coatings able to protect many surfaces.

SUMMARY OF INVENTION

An aspect of the present invention provides aqueous compositions containing particles, preferably inorganic pigments, and/or extenders, having hydrophobic surfaces that when applied to a substrate, such as metals or woods, prevents corrosion of the substrate. Specifically, one embodiment of the present invention is a corrosion resistant coating comprising: a water borne resin; water; and one or more particles selected from the group comprising an inorganic particle, extender, and combination thereof; wherein the one or more particle comprises a hydrophobic coating comprising at least one organosilane having the formula:

$$R'_x Si(R)_{4-x}$$

wherein

R' is a nonhydrolyzable aliphatic, cycloaliphatic or aromatic group having 8-20 carbon atoms; R is a hydrolyzable group selected from alkoxy, halogen, acetoxy or hydroxy or mixtures thereof; and x=1 to 3;
and at least one polysiloxane having the formula:

$$\left(R_n SiO_{\frac{4-n}{2}}\right)_m$$

Wherein R is an organic or inorganic group; n=0-3; and m ≥ 2.

Another aspect of the invention comprises a method of inhibiting corrosion of a substrate comprising the step of providing a corrosion resistant coating comprising: a water borne resin; water; one or more particles selected from the group consisting of inorganic particle, extender, and combinations thereof; wherein the one or more particles comprises a hydrophobic coating as defined in claim 10; applying the corrosion resistant coating to a surface of a substrate; and drying the corrosion resistant coating.

BRIEF DESCRIPTION OF THE FIGURES

FIG. 1 shows photographs of Aqueous Comparative Example A Slurry (FIG. 1A), and Aqueous Example B Slurry (FIG. 1B) dried on steel panels after incubating in a Singleton Salt Spray Chamber for 240 hours.
FIG. 2 shows electrochemical impedance spectroscopy (EIS) curves of compositions Aqueous Comparative Example A Slurry and Aqueous Example B Slurry on steel panels.
FIG. 3 shows photographs of Aqueous Comparative Example C Slurry (FIG. 3A) and Aqueous Example D Slurry (FIG. 3B) dried on steel panels after incubating in a Singleton Salt Spray Chamber for 672 hours.
FIG. 4 shows photographs of Aqueous Comparative Example E Slurry (FIG. 4A), and Aqueous Example F Slurry (FIG. 4B) dried on steel panels after incubating in a Singleton Salt Spray Chamber for 371 hours.
FIG. 5 is a schematic diagram of the wetting angle 8 measured in Examples G, H, and I.

DETAILED DESCRIPTION

It is understood that this invention is not limited to particular embodiments, which can, of course, vary. It is also to be understood that the terminology used herein is for the purpose of describing particular embodiments only, and is not intended to be limiting. Further, all publications referred to herein are incorporated by reference herein for the purpose cited to the same extent as if each was specifically and individually indicated to be incorporated by reference herein.

As used in this specification and the appended claims, terms in the singular and the singular forms "a," "an," and "the," for example, include plural referents unless the content clearly dictates otherwise. Thus, for example, reference to "pigment," "the pigment," or "a pigment" also includes a plurality of pigments. Use of the term "a pigment" also includes, as a practical matter, many types of that pigment.

Additionally, as used herein, "comprising" is to be interpreted as specifying the presence of the stated features, integers, steps, or components as referred to, but does not preclude the presence or addition of one or more features, integers, steps, or components, or groups thereof. Thus, for example, a sample comprising a dispersant may contain additional dispersants or other components, such as other non-dispersant additives. Additionally, the term "comprising" is intended to include examples encompassed by the terms "consisting essentially of" and "consisting of." Similarly, the term "consisting essentially of" is intended to include examples encompassed by the term "consisting of."

CORROSION RESISTANT COMPOSITIONS

The aqueous corrosion resistant compositions of the present invention include inorganic particles having hydrophobic surfaces, which are quite different from most conventional aqueous compositions. Typical aqueous coatings containing inorganic particles comprise inorganic particles having hydrophilic surfaces that like water and are easily dispersible in a mixture of aqueous resin. Inorganic particle surfaces may be coated with silica, zircornia, alumina, or mixtures thereof, to create particles having hydrophilic surfaces. The inorganic particles of the present invention coated with a hydrophobic coating selected from the group consisting of at least one organosilicon compound having the formula:

$$R'_x Si(R)_{4-x}$$

wherein
R' is a nonhydrolyzable aliphatic, cycloaliphatic or aromatic group having 8-20 carbon atoms; R is a hydrolyzable group selected from alkoxy, halogen, acetoxy or hydroxy or mixtures thereof; and x=1 to 3;
and at least one polysiloxane having the formula:

$$(R_n SiO_{\frac{4-n}{2}})_m$$

Wherein R is an organic or inorganic group; n=0-3; and m $\geq$ 2.

The corrosive preventing coatings of the present invention can be applied to any substrates capable of corroding, such as metal (such as steel), woods, cements, concretes, composites, or a combination thereof. Inorganic particles used in the present invention include inorganic particles and/or extenders, preferable $TiO_2$ pigment. To form an anticorrosive coating these inorganic particles are mixed with water and one or more water borne resins. The amount of water in these compositions is in the range of 10 to 70 weight percent of the composition, preferably in the range of 20 to 50 weight percent of the composition, most preferably in the range of 20 to 40 weight percent of the composition. It is believed that any water borne resin may be used in the composition of the present invention, but the preferred resin is acrylic.

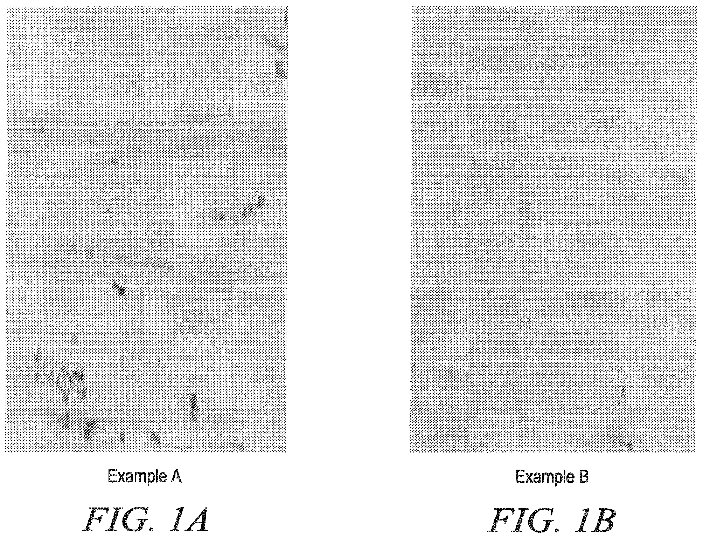

The anti-corrosive properties of compositions of the present invention were demonstrated by coating steel panels with the compositions and placing them in a salt water environment, specifically in a Singleton Salt Spray Chamber, for hundreds of hours. The steel panels were then removed from the salt water environment and the amount of rust on each plate was then studied. For example, one metal panel was coated with aqueous example B slurry according to the present invention comprising 16 wt. % $TiO_2$ coated with octyltriethoxysilane to form a hydrophobic surface on the $TiO_2$ particles. Another plate was coated with aqueous comparative example A aqueous slurry comprising 16 wt. % $TiO_2$ coated with hydrous alumina to form a hydrophilic surface on the $TiO_2$ particles. Both plates were placed in a Singleton Salt Spray Chamber for 240 hours under the ASTM B117 standard test method. As shown in FIG. 1, the plate coated with the aqueous example B slurry developed less rust than the plate covered with the aqueous comparative example A slurry.

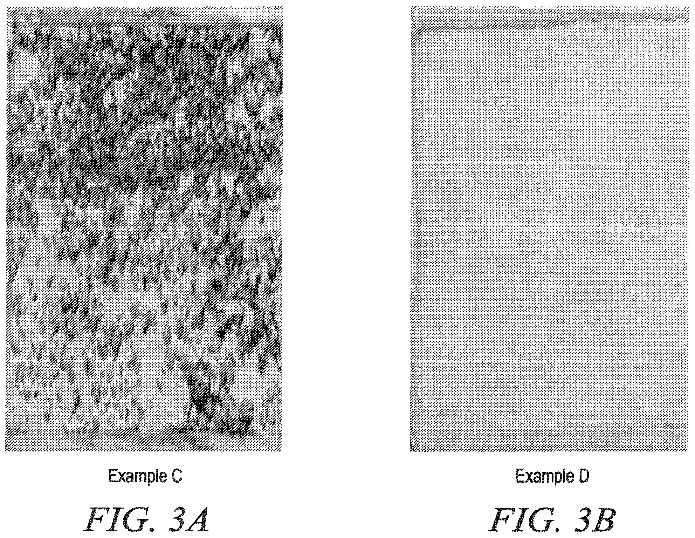

Another test was performed on aqueous example D slurry and aqueous comparative example C slurry by coating steel panels with the compositions and placing them in a salt water environment. One metal plate was coated with aqueous example D slurry of the present invention comprising 27 wt. % $TiO_2$ coated with octyltriethoxysilane to form a hydrophobic surface. Another metal plate was coated with aqueous comparative example C slurry, an aqueous slurry composition comprising 27 wt. % $TiO_2$ coated with hydrous alumina to form a hydrophilic surface. Both plates were placed in a Singleton Salt Spray Chamber for 672 hours under the ASTM B117 standard test method. As shown in FIG.3, the steel panel coated with the aqueous Example D slurry developed less rust than the steel panel covered with the aqueous Example C slurry.

INORGANIC PARTICLES

Inorganic particles used in the corrosion resistant coatings of the present invention include inorganic pigments, extenders, or a combination thereof having inherently hydrophobic surfaces, or surfaces that are coated with an organic layer to create a hydrophobic surface. Some examples of inorganic pigments include, but are not limited to, ZnS, $TiO_2$, $BaSO_4$, ZnO, Alumina, Silica, $CaCO_3$ and $MoS_2$. Corrosion resistant coatings of the present invention typically include in the range of 5 to 50 weight percent of inorganic particles, more preferably in the range from 10 to 40 weight percent of inorganic particles, and most preferably in the range of 10 to 30 weight percent of inorganic particles.

Hydrophobic is defined herein as water repellent. The term hydrophobic when describing a corrosion resistant coating of the present invention means the surfaces of inorganic particles or part of inorganic particles in the coating are hydrophobic, i.e., the surface of the particle contains hydrophobic components. It is believed that the hydrophobicity of a corrosion resistant coating of the present invention is created by inorganic particles treated with one or more layers of an organic coating comprisimg (a mixture of (a) and (b) wherein

(a) is at least one organosilicon compound having the formula:

$$R'_xSi(R)_{4-x}$$

wherein

R' is a nonhydrolyzable aliphatic, cycloaliphatic or aromatic group having 8-20 carbon atoms;
R is a hydrolyzable group selected from alkoxy, halogen, acetoxy or hydroxy or mixtures thereof; and x=1 to 3; and

(b) is at least one polysiloxane having the formula:

$$(R_nSiO_{\frac{4-n}{2}})_m$$

wherein
R is an organic or inorganic group; n=0-3; and m $\geq$ 2.

In particular, titanium dioxide is an especially useful inorganic pigment in the processes and products of this invention. Titanium dioxide ($TiO_2$) pigment useful in the present invention may be in the rutile or anatase crystalline form. It is commonly made by either a chloride process or a sulfate process. In the chloride process, $TiCl_4$ is oxidized to $TiO_2$ pigments. In the sulfate process, sulfuric acid and ore containing titanium are dissolved, and the resulting solution goes through a series of steps to yield $TiO_2$. Both the sulfate and chloride processes are described in greater detail in "The Pigment Handbook", Vol. 1, 2nd Ed., John Wiley & Sons, NY (1988), the teachings of which are incorporated herein by reference. The pigment may be a pigment or nanoparticle.

The titanium dioxide pigment may be substantially pure titanium dioxide or may contain other components, such as silica, alumina, aluminosilicates, phosphates, and zirconia. These components may become incorporated into the pigments and/or may be coated on the surfaces of the pigments, for example, by an oxidation process and/or a precipitation process. These components may be typically about 0.1 to about 20 wt%, more typically about 0.1 to about 12 wt%, and most typically about 0.5 to about 10 wt%, based on the total pigment weight.

The pigment is washed and filtered to remove salts. The process is done in a rotary filter or a filter press. The filter cake is then dried in a spray or flash drier and the drier discharge is de-agglomerated, such as, in a hammer mill. The pigment is conveyed pneumatically to a fluid energy mill, e.g. micronizer where the final de-agglomeration step is done. The organic treatment can be done by spraying octyltriethoxysilane (neat or as an aqueous solution) at several locations: onto the filter cake before the hammer mill, at the micronizer (main inlet, jet nozzle and/or main outlet). The addition can take place exclusively at one location or at more than one location, simultaneously,

By "pigment" it is meant that the titanium dioxide pigments have an average size of less than 1 micron. Typically, the pigments have an average size of from about 0.020 to about 0.95 microns, more typically from about 0.050 to about 0.75 microns and most typically about 0.075 to about 0.60 microns, as measured by Horiba LA300 Particle Size Analyzer.

The inorganic pigment may have a surface area of about 6 to about 150 $m^2/g$; more typically about 6 to about 30 $m^2/g$; and still more typically about 8 to about 15 $m^2/g$.

Extenders, also called "extender pigments", are typically inorganic particles having an average size of from about 0.50 to about 20 microns. Not like inorganic pigments, such as $TiO_2$, extender pigment itself provides little opacity. Extender pigments are added to paints to lower their cost or enhance other properties. Extender pigments include, but are not limited to calcium carbonate, calcium sulfate, silica, aluminosilicates, talc, and clays.

## PROPERTIES OF PARTICLES WITH HYDROPHOBIC SURFACES

An aqueous composition comprising 10% to 50% water including a high concentration of particles having hydrophobic surfaces was prepared and then dried on surfaces to protect these surfaces from corrosion as illustrated in FIGs. 1-4.

## COATING COMPOSITIONS

The compositions of the present invention may include a mixture of water borne resin, inorganic particles, and other additives known to one skilled in the art.

## RESINS

The resin is selected from the group consisting of water-dispersible (or water borne) resin such as latex (acrylic); vinyl-acrylic; epoxy; alkyd; urethanes; and unsaturated polyesters; and mixture thereof. By "anti-corrosive composition" or "corrosion resistant" as used herein is meant surface coatings intended for the protection against corrosion and/or decoration of a substrate, comprising essentially an emulsion, latex, or a suspension of a film-forming material dispersed in an aqueous phase, and typically comprising surfactants, protective colloids and thickeners, pigments and extender pigments, preservatives, fungicides, freeze-thaw stabilizers, antifoam agents, agents to control pH, coalescing aids, and other ingredients. A water-dispersed coating may be exemplified by, but not limited to, pigmented coatings such as latex paints. For latex paints the film forming material is a latex polymer of acrylic, styrene-acrylic, vinyl-acrylic, ethylene-vinyl acetate, vinyl acetate, alkyd, vinyl chloride, styrenebutadiene, vinyl versatate, vinyl acetate-maleate, or a mixture thereof. Such water-dispersed coating compositions are described by C. R. Martens in "Emulsion and Water-Soluble Paints and Coatings" (Reinhold Publishing Corporation, New York, NY, 1965). Tex-Cote® and Super-Cote®, Rhopelx®, Vinnapas® EF500 are further examples of water based coating compositions comprising 100% acrylic resin.

The alkyd resins may be complex branched and cross-linked polyesters having unsaturated aliphatic acid residues. Urethane resins typically comprise the reaction product of a polyisocyanate, usually toluene diisocyanate, and a polyhydric alcohol ester of drying oil acids.

The resin can be present in the amount of about 50 to about 95 % by weight based on the total weight of the coating composition. The amount of resin is varied depending on the amount of gloss finish desired.

COLORANT

The treated particles, including inorganic pigments, particularly the treated titanium dioxide pigments described earlier may be used alone or in combination with conventional colorants. Any conventional colorant such as a pigment, dye or a dispersed dye may be used in this disclosure to impart color to the coating composition. In one embodiment, generally, about 0.1% to about 40% by weight of conventional pigments, based on the total weight of the component solids, can be added. More typically, about 0.1% to about 25% by weight of conventional pigments, based on the total weight of component solids, can be added.

The pigment component of this invention may be any of the generally well-known pigments or mixtures thereof used in coating formulations, as reported, e.g., in Pigment Handbook, T. C. Patton, Ed., Wiley-Interscience, New York, 1973. Any of the conventional pigments used in coating compositions can be utilized in these compositions such as the following: metallic oxides, such as titanium dioxide, zinc oxide, and iron oxide, metal hydroxide, metal flakes, such as aluminum flake, chromates, such as lead chromate, sulfides, sulfates, carbonates, carbon black, silica, talc, china clay, phthalocyanine blues and greens, organo reds, organo maroons, pearlescent pigments and other organic pigments and dyes. If desired chromate-free pigments, such as barium metaborate, zinc phosphate, aluminum triphosphate and mixtures thereof, can also be used.

OTHER ADDITIVES

A wide variety of additives may be present in the coating compositions of this invention as necessary, desirable or conventional. These compositions can further comprise various conventional paint additives, such as dispersing aids, anti-settling aids, wetting aids, thickening agents, extenders, plasticizers, stabilizers, light stabilizers, antifoams, defoamers, catalysts, texture-improving agents and/or antiflocculating agents. Conventional paint additives are well known and are described, for example, in "C-209 Additives for Paints" by George Innes, February 1998, the disclosure of which is incorporated herein by reference. The amounts of such additives are routinely optimized by the ordinary skilled artisan so as to achieve desired properties in the paint, such as thickness, texture, handling, and fluidity.

Coating compositions of the present invention may comprise various rheology modifiers or rheology additives (such as Acrysol®), wetting agents, dispersants and/or co-dispersants, and microbicides and/or fungicides. To achieve enhanced weatherability, the present coating compositions may further comprise UV (ultra-violet) absorbers such as Tinuvin®.

Coating compositions of the present invention may further comprise at least one solvent. Suitable solvents can be solvents having an octanol-water partition coefficient of 1 to 5. The octanol/water partition coefficient is defined as the ratio of a chemical's concentration in the octanol phase to its concentration in the aqueous phase of a two-phase octanol/water system at equilibrium. Such solvents can include, for example, ketones, alcohols, esters and ethers of alcohols, aromatics, glycol ethers and esters. In an aspect of the invention such solvents can include, for example, propylene glycol n-butyl ether, dipropylene glycol n-butyl ether, tripropylene glycol n-butyl ether, 2,2,4-trimethylpentane-1,3-diol monoisobutyrate, butanol, hexanol, pentanol, octanol, 2-ethyl-1-butanol, 2-methyl-1-pentanol, 2-butoxyethanol, 2,2,4-trimethyl-1,3-pentanediol mono (2-methylpropanoate), diethylene glycol n-butyl ether acetate, diethylene glycol n-butyl ether acetate, propylene glycol phenyl ether, ethylene glycol phenyl ether, isobutyl isobutyrate, methyl isobutyl ketone, methyl ethyl ketone, 1-methoxy-2-propyl acetate (propylene glycol monomethyl ether acetate), dioctyl phthalate.

Coating compositions of the present invention may further comprise ceramic or elastomeric substances, which are heat and/or infrared reflective, so as to provide additional heat reflective benefits.

PREPARATION OF COATING COMPOSITIONS

The present invention provides a process for preparing a coating composition, such as a paint formulation, comprising mixing the inorganic particles, including pigment-containing components with the resin to form a coating base. A vehicle such as water is present typically in the range from 10 to 70 weight percent of a composition, preferably in the range of 10 to 50 weight percent of a composition, more preferably in the range of 20 to 40 weight percent of a corrosion resistant coating of the present invention. Typically these coating compositions may comprise from about 30 to about 55% solids by weight and typically about 25% to about 45% solids by volume. Typically the coating compositions of this invention have a density of about 1.09 to about 1.43 g/cm$^3$ (about 9.1 to about 11.9 pounds per gallon), more typically about 1.41 to about 1.30 g/cm$^3$ (about 9.5 to about 10.8 pounds per gallon). Any mixing means known to one skilled in the art may be used to accomplish this mixing. An example of a mixing device includes a high speed Dispermat®, supplied by BYK-Gardner, Columbia, MD.

Corrosion resistant coatings of the present invention may be applied by any means known to one skilled in the art, for example, by brush, roller, commercial grade airless sprayers, or electrostatically in a particle coating. Coating compositions presented herein may be applied as many times necessary so as to achieve sufficient coating on a surface, for example, an exterior wall, metal substrate, wood substrate, paper substrate, and/or plastic substrate. Typically, these coating compositions may be applied from about 50.8 to about 254 micrometer (about 2 mils to about 10 mils) wet film thickness, which is equivalent to from about 25.4 to about 127 micrometer (about 1 to about 5 dry mils film thickness). Coating compositions presented herein may be applied directly to surfaces or applied after surfaces are first coated with primers as known to one skilled in the art. The compositions of this invention may be a paint, and the paint may be applied to a surface selected from the group including of metals, woods, bridges, boats, cars, and buildings. The compositions of the present invention dry on the surface of a substrate to form an anticorrosive coating. The anticorrosive coatings of the present invention without the addition of anticorrosive additives such as amines, hydrazine, zinc phosphates, hexavalent chromium, and lead red, have a corrosive resistance of greater than $1 \times 10^7$ Ohms, preferably greater than $1 \times 10^8$ Ohms, and more preferably greater than $1 \times 10^9$ Ohms as measured by an Electrochemical impedance spectroscopy. It is believe that corrosion resistant coatings of the present invention including anticorrosive additives may have even greater corrosive resistance.

DEFINITIONS

"Tamol-165": a dispersant, ammonium salt of a hydrophobic copolymer, manufactured by DOW Chemicals.
"Tamol-681": a dispersant, ammonium salt of a hydrophobic copolymer, manufactured by DOW Chemicals.
"Triton CF-10": a nonionic surfactant, benzyl-polyethylene glycol, manufactured by DOW Chemicals.
"Maincote HG-54D": water-borne acrylic resin suspension, manufactured by DOW Chemicals.
"Maincote HG-31": water-borne acrylic resin suspension, manufactured by DOW Chemicals.
"Tego Foamex 1488": defoamer, an emulsion of a polyether siloxane copolymer, contains fumed silica, manufactured by Evonik Industries.
"Capstone FS-61": ammonia salt of fluorinated compound, manufactured by DuPont.
"DPM": Dipropylene glycol methyl ether, a coalescent, manufactured by DOW Chemicals.
"Corrosion or Corrosive" means causing damage to metal or other materials through a chemical process such as oxidation and/or salt related chemical reactions.
"Anti-corrosive" or "corrosion resistant" means to prevent damage to metal or other materials through a chemical process such as oxidation and/or salt related chemical reactions.
"Water-resistant" means objects relatively unaffected by water or resisting the ingress of water.

EXAMPLES

COMPARATIVE EXAMPLE A

Aqueous Comparative Example A Slurry was prepared by mixing the components of Table 1 by conventional methods.

Table 1: Composition of Comparative Example A Slurry

| Components | Weight (gram) |
|---|---|
| Rutile $TiO_2$ pigment coated with silica and then with hydrous alumina to form a hydrophilic surface having a medium particle size of 0.36 um. | 97.5 |
| Tamol-165 | 4.8 |
| Ammonia (28 wt%) | 2.5 |
| Triton CF-10 or Capstone FS-61 | 0.75 |
| Water | 20 |
| Butyl cellosolve | 55 |
| DPM | 9 |
| Maincote HG-54D | 330 |
| Tego Foamex 1488 | 1.95 |
| Sodium nitrite (15 wt%) | 4.5 |

EXAMPLE B

Aqueous Example B Slurry was prepared by mixing Table 2 components by conventional methods.

Table 2: Composition of Example B Slurry of the Present Invention

| Components | Weight (gram) |
|---|---|
| Rutile $TiO_2$ pigment coated with octyltriethoxysilane to form a hydrophobic surface having a mean particle size of 0.23 uM. | 97.5 |
| Tamol-165 | 4.8 |
| Ammonia (28 wt%) | 2.5 |
| Triton CF-10 or Capstone FS-61 | 0.75 |
| Water | 20 |
| Butyl cellosolve | 55 |
| DPM | 9 |
| Maincote HG-54D | 330 |
| Tego Foamex 1488 | 1.95 |
| Sodium nitrite (15 wt%) | 4.5 |

DETERMINATION OF ANTICORROSION PROPERTY OF COMPOSITIONS OF EXAMPLES A AND B

Anticorrosion properties of Aqueous Comparative Example A Slurry and Aqueous Example B Slurry were determined using a Singleton Salt Spray Chamber. The Singleton Salt Spray was used under the following conditions: Condensation Rate: 2 ml. per hour; Humidifier Temperature: 118°F; Tank Temperature: 95°F; Solution: 5% Sodium Chloride; Test Duration: 240 hours; and sample edges were coated with candle wax to cover any uncoated metal on the edges. FIG.1 illustrates Aqueous Example B Slurry including inorganic particles with hydrophobic surfaces (FIG. 1B) provided much better anti-corrosion protection then Aqueous Comparative Example A Slurry including inorganic particles having hydrophilic surfaces (FIG. 1A).

DETERMINATION OF ANTICORROSION PROPERTIES OF EXAMPLES A AND B

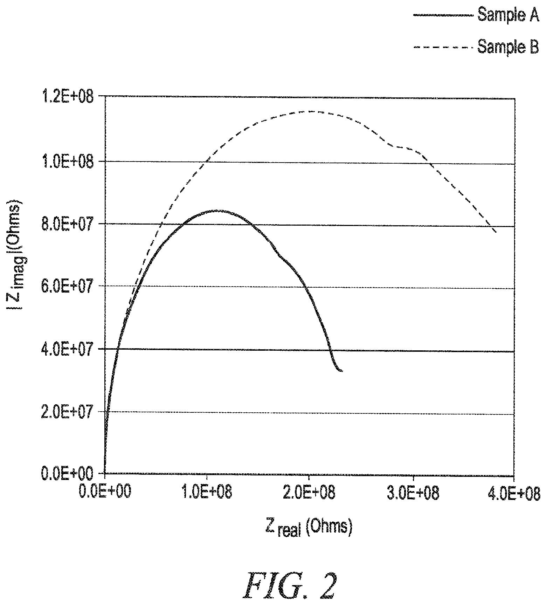

Electrochemical impedance spectroscopy (EIS) was also used to evaluate anti-corrosion property of Aqueous Comparative Example A Slurry and Aqueous Example B Slurry. The EIS was used at room temperature with 3% NaCl and data was collected as shown in Table 3. Aqueous Example B Slurry, a composition including an inorganic pigment having a hydrophobic surface provided greater anti-corrosion protection than Aqueous Comparative Example A Slurry including an inorganic pigment having a hydrophilic surface. FIG.2 shows that Aqueous Example B Slurry, a composition including an inorganic pigment having a hydrophobic surface, gives greater anti-corrosion protection than Aqueous Comparative Example A Slurry, a composition including an organic pigment having a hydrophilic surface.

Table 3. Comparison of EIS Results of Examples A and B

| Samples | Corrosion potential Ecor (V vs SCE) | Corrosion Resistance Rp (Ohms) | R (0.01 Hz) - R (100Hz) (Ohms) |
|---|---|---|---|
| A | -0.439 | $1.4 \times 10^6$ | $7.0 \times 10^5$ |
| B | +0.382 | $1.3 \times 10^9$ | $1.3 \times 10^9$ |

COMPARATIVE EXAMPLE C

Aqueous Comparative Example C Slurry was prepared by mixing the components of Table 4 by conventional methods.

Table 4: Components of Example C

| Components | Weight (gram) |
|---|---|
| Rutile $TiO_2$ pigment coated with silica and then with hydrous alumina to form a hydrophilic surface having a medium particle size of 0.36 um. | 390 |
| Tamol-165 | 19 |
| Ammonia (28 wt%) | 5 |
| Triton CF-10 | 1.5 |
| Water | 35 |
| Butyl cellosolve | 110 |
| DPM | 18 |
| Maincote HG-54D | 660 |
| Tego Foamex 1488 | 4 |
| Sodium nitrite (15 wt%) | 9 |

EXAMPLE D

Aqueous Example D Slurry was prepared by mixing the components in Table 5 by conventional methods.

Table 5: Components of Example D

| Components | Weight (gram) |
|---|---|
| Rutile $TiO_2$ pigment coated with octyltriethoxysilane to form a hydrophobic surface having a mean particle size of 0.23 uM. | 390 |
| Tamol-165 | 19 |
| Ammonia (28 wt%) | 5 |
| Triton CF-10 | 1.5 |
| Water | 35 |
| Butyl cellosolve | 110 |
| DPM | 18 |
| Maincote HG-54D | 660 |
| Tego Foamex 1488 | 4 |
| Sodium nitrite (15 wt%) | 9 |

DETERMINATION OF ANTICORROSION OF AQUEOUS COMPARATIVE EXAMPLES C SLURRY AND AQUEOUS EXAMPLE D SLURRY

Anticorrosion properties of coatings were determined using a Singleton Salt Spray Chamber under the following conditions: Condensation Rate: 2 ml. per hour; Humidifier Temperature: 118°F; Tank Temperature: 95°F; Solution: 5% Sodium Chloride; Test Duration: 240 hours; and sample edges were coated with candle wax to cover any uncoated metal on the edges. FIG. 3 shows that Aqueous Example D Slurry including an inorganic pigment having a hydrophobic surface (FIG. 3B) exhibits a greater anti-corrosion performance than Aqueous Comparative Example C including an organic pigment having a hydrophilic surface (FIG. 3A) when incubated in a Singleton Salt Spray Chamber for 672 hours.

COMPARATIVE EXAMPLE E

Aqueous Comparative Example E Slurry was prepared by mixing the components of Table 6 by conventional methods.

Table 6: Components of Example E

| Components | Weight (gram) |
|---|---|
| Rutile TiO$_2$ pigment coated with silica and then with hydrous alumina to form a hydrophilic surface having a medium particle size of 0.36 um. | 220 |
| Tamol-681 | 9.43 |
| Ammonia (28 wt%) | 2 |
| Ammonia (15 wt%) | 7 |
| Surfynol 104DPM | 4 |
| Water | 102 |
| Dowanol DPM | 16 |
| Texanol | 48.6 |
| Maincote HG-31 | 600 |
| Tego Foamex 825 | 1 |
| ACRYSOL RM-8W | 2 |
| Sodium nitrite (15 wt%) | 9 |

EXAMPLE F

Aqueous Example F Slurry was prepared by mixing the components in Table 7 by conventional methods.

Table 7: Components of Example F

| Components | Weight (gram) |
|---|---|
| Rutile TiO$_2$ pigment coated with silica and alumina and then coated with octyltriethoxysilane to form a hydrophobic surface having a mean particle size of 0.36 um. | 220 |
| Tamol-681 | 9.43 |
| Ammonia (28 wt%) | 2 |
| Ammonia (15 wt%) | 7 |
| Surfynol 104DPM | 4 |
| Water | 102 |
| Dowanol DPM | 16 |
| Texanol | 48.6 |
| Maincote HG-31 | 600 |
| Tego Foamex 825 | 1 |
| ACRYSOL RM-8W | 2 |
| Sodium nitrite (15 wt%) | 9 |

DETERMINATION OF ANTICORROSION OF AQUEOUS COMPARATIVE EXAMPLES E SLURRY AND AQUEOUS EXAMPLE F SLURRY

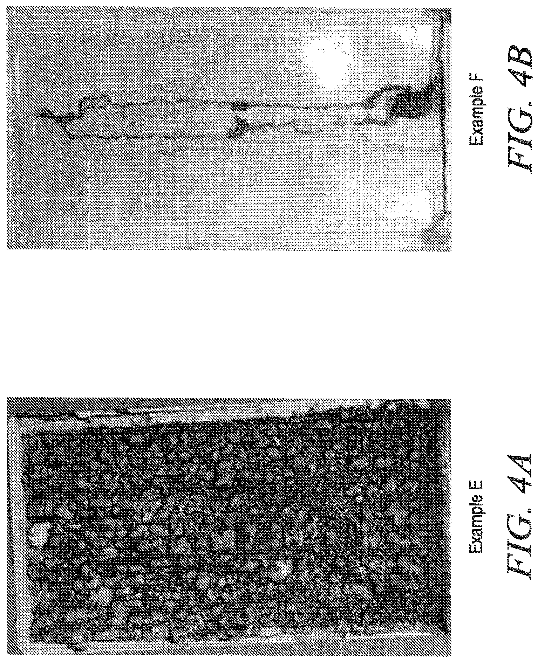

Anticorrosion properties of coatings were determined using a Singleton Salt Spray Chamber under the following conditions: Condensation Rate: 2 ml. per hour; Humidifier Temperature: 118°F; Tank Temperature: 95°F; Solution: 5% Sodium Chloride; Test Duration: 371 hours; and sample edges were coated with candle wax to cover any uncoated metal on the edges. FIG. 4 shows that Aqueous Example F Slurry including an inorganic pigment having a hydrophobic surface (FIG. 4B) exhibits a greater anti-corrosion performance than Aqueous Comparative Example E including an organic pigment having a hydrophilic surface (FIG. 4A) when incubated in a Singleton Salt Spray Chamber for 672 hours.

COMPARATIVE EXAMPLE G

Titanium dioxide particles were made by the vapor phase oxidation process of titanium tetrachloride and the surface of titanium dioxide particles was treated with silica and alumina. 200 grams of the silica/alumina-treated TiO2 powder was mixed with 5.5 mmol of triethoxy(ethyl)silane in 150 g of ethanol for 10 minutes. The ethanol was removed and the powder was dried in an oven at 110 °C for 4 hours to obtain comparative example G.

EXAMPLE H

Titanium dioxide particles were made by the vapor phase oxidation process of titanium tetrachloride and the surface of titanium dioxide particles was treated with silica and alumina. 200 grams of the silica/alumina-treated TiO2 powder was mixed with 5.5 mmol of triethoxy(octyl)silane in 150 g of ethanol for 10 minutes. The ethanol was removed and the powder was dried in an oven at 110 °C for 4 hours to obtain example H.

EXAMPLE I

Titanium dioxide particles were made by the vapor phase oxidation process of titanium tetrachloride and the surface of titanium dioxide particles was treated with silica and alumina. 200 grams of the silica/alumina-treated TiO2 powder was mixed with 5.5 mmol of triethoxy(dodecyl)silane in 400 g of ethanol for 10 minutes. The ethanol was removed and the powder was dried in an oven at 110 °C for 4 hours to obtain example I.

The relative hydrophobicity of each example was determined by measuring the water contact angle (WCA). The WCA is the angle, where a liquid/vapor interface meets a solid surface. In this case, the liquid is water and the vapor is air.

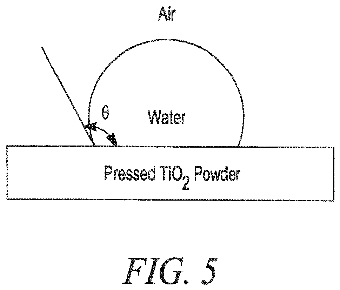

Samples of the treated TiO2 from Examples G, H, and I were pressed on a sample holder to create a flat surface. A drop of water was then placed on the sample surface and the WCA was measured on the surface. Two measurements were obtained for each Example. A schematic diagram demonstrating the WCA measurement is shown in Figure 5. Generally, if the WCA is less than 90°, the surface is considered hydrophilic; and if the water contact angle is larger than 90°, the surface is considered hydrophobic.

From the below data it can be seen that samples prepared according to a preferred aspect of the invention are more hydrophobic than the comparative sample.

Table 8

| Example # | Pigment Base | Surface Treatment | WCA Measurement 1 | WCA Measurement 2 | WCA Avg. |
|---|---|---|---|---|---|
| Comparative Example G | Alumina/silica coated TiO$^2$ powder | Triethoxy(ethyl)si-lane | 0° | 0° | 0° |
| Example H | Alumina/silica coated TiO$^2$ powder | Triethoxy(octyl)si-lane | 117.2° | 120.8° | 119° |
| Example I | Alumina/silica coated TiO$^2$ powder | Triethoxy (dode-cyl)silane | 131.5° | 127.8° | 129.7 ° |

**Claims**

1. A corrosion resistant coating comprising:

   a. a water borne resin;
   b. water; and
   c. one or more particles selected from the group comprising an inorganic particle, extender, and combination thereof; wherein the one or more particle comprises a hydrophobic coating comprising at least one organosilane having the formula:

   $$R'_x Si(R)_{4-x}$$

   wherein R' is a nonhydrolyzable aliphatic, cycloaliphatic or aromatic group having 8-20 carbon atoms; R is a hydrolyzable group selected from alkoxy, halogen, acetoxy or hydroxy or mixtures thereof; and x=1 to 3; and at least one polysiloxane having the formula:

$$(R_n SiO_{\frac{4-n}{2}})_m$$

wherein R is an organic or inorganic group; n=0-3; and m $\geq$ 2.

2. The corrosion resistant coating of claim 1, further comprising at least one solvent.

3. The corrosion resistant coating of claim 1, wherein the one or more particles is titanium dioxide.

4. The corrosion resistant coating of claim 1, wherein the corrosion resistant coating has a corrosive resistance of greater than 1 X $10^7$ Ohms as measured by an Electrochemical Impedance Spectroscopy.

5. The corrosion resistant coating of claim 1, wherein the corrosion resistant coating has a corrosion resistance of greater than 1X $10^8$ Ohms as measured by an Electronic Impedance Spectroscopy.

6. The corrosion resistant coating of claim 1 wherein the hydrophobic coating reduces corrosion and water penetration ability.

7. The corrosion resistant coating of claim 2 wherein the at least one solvent is selected from the group consisting of ketones, alcohols, esters and ethers of alcohols, aromatics, glycol ethers and esters.

8. The corrosion resistant coating of any of claims 1 through 5, wherein the one or more particles has a coating of metal oxides, or silica, or phosphates, or metal silicates, or mixtures thereof, located between the one or more particle surface and the hydrophobic coating.

9. The corrosion resistant coating of any of claims 1 through 5, wherein the one or more particles has a coating of silica and alumina between the particle surface and the hydrophobic coating.

10. A method of inhibiting corrosion of a substrate comprising the steps of:

    a. providing a corrosion resistant coating comprising:

       i) a water borne resin;
       ii) water;
       iii) one or more particles selected from the group comprising an inorganic particle, extender, and combination thereof; wherein the one or more particle comprises a hydrophobic coating comprising at least one organosilane having the formula:

       R'$_x$Si(R)$_{4-x}$

       wherein R' is a nonhydrolyzable aliphatic, cycloaliphatic or aromatic group having 8-20 carbon atoms; R is a hydrolyzable group selected from alkoxy, halogen, acetoxy or hydroxy or mixtures thereof; and x=1 to 3; and at least one polysiloxane having the formula:

       $$(R_n SiO_{\frac{4-n}{2}})_m$$

       wherein R is an organic or inorganic group; n=0-3; and m $\geq$ 2;

    b. applying the corrosion resistant coating to a surface of a substrate; and
    c. drying the corrosion resistant coating.

11. The method of claim 10, wherein the corrosion resistant coating is applied to a metal substrate.

12. The method of claim 10, wherein the corrosion resistant coating is applied to a steel substrate.

13. The method of claim 10, wherein the corrosion resistant coating is applied to a wood substrate.

**14.** The method of claim 10, wherein the corrosion resistant coating is applied to a concrete substrate.

**15.** The method of claim 10, wherein the one or more particles has a coating of silica and alumina between the particle surface and the hydrophobic coating.

**Patentansprüche**

**1.** Korrosionsbeständige Beschichtung, Folgendes umfassend:

a. ein Harz auf Wasserbasis;
b. Wasser; und
c. ein oder mehrere Partikel ausgewählt aus der Gruppe umfassend ein anorganisches Partikel, ein Streckmittel und eine Kombination davon; wobei das eine oder die mehreren Partikel eine hydrophobe Beschichtung umfassen, die mindestens ein Organosilan mit der folgenden Formel umfasst:

$$R'_x Si(R)_{4-x}$$

wobei R' eine nichthydrolysierbare aliphatische, cycloaliphatische oder aromatische Gruppe ist, die 8-20 Kohlenstoffatome aufweist; R eine hydrolysierbare Gruppe ausgewählt unter Alkoxy, Halogen, Acetoxy oder Hydroxyl oder Mischungen davon ist; und x = 1 bis 3; und mindestens ein Polysiloxan mit der folgenden Formel:

$$\left(R_n SiO_{\frac{4-n}{2}}\right)_m$$

wobei R eine organische oder anorganische Gruppe ist; n = 0-3; und m ≥ 2.

**2.** Korrosionsbeständige Beschichtung nach Anspruch 1, ferner mindestens ein Lösungsmittel umfassend.

**3.** Korrosionsbeständige Beschichtung nach Anspruch 1, wobei das eine oder die mehreren Partikel Titandioxid sind.

**4.** Korrosionsbeständige Beschichtung nach Anspruch 1, wobei die korrosionsbeständige Beschichtung einen Korrosionswiderstand von mehr als $1 \times 10^7$ Ohm aufweist, wie durch eine elektrochemische Impedanzspektroskopie gemessen.

**5.** Korrosionsbeständige Beschichtung nach Anspruch 1, wobei die korrosionsbeständige Beschichtung einen Korrosionswiderstand von mehr als $1 \times 10^8$ Ohm aufweist, wie durch eine elektronische Impedanzspektroskopie gemessen.

**6.** Korrosionsbeständige Beschichtung nach Anspruch 1, wobei die hydrophobe Beschichtung Korrosion und Wassereindringfähigkeit reduziert.

**7.** Korrosionsbeständige Beschichtung nach Anspruch 2, wobei das mindestens eine Lösungsmittel aus der Gruppe ausgewählt ist bestehend aus Ketonen, Alkoholen, Estern und Ethern von Alkoholen, Aromaten, Glykolethern und -estern.

**8.** Korrosionsbeständige Beschichtung nach einem der Ansprüche 1 bis 5, wobei das eine oder die mehreren Partikel eine Beschichtung von Metalloxiden oder Siliciumdioxid oder Phosphaten oder Metallsilicaten oder Mischungen davon aufweisen, die zwischen der Oberfläche des einen oder der mehreren Partikel und der hydrophoben Beschichtung gelegen ist.

**9.** Korrosionsbeständige Beschichtung nach einem der Ansprüche 1 bis 5, wobei das eine oder die mehreren Partikel eine Beschichtung aus Siliciumdioxid und Aluminiumoxid zwischen der Partikeloberfläche und der hydrophoben Beschichtung aufweisen.

**10.** Verfahren zum Hemmen einer Korrosion eines Substrats, umfassend die Schritte von:

a. Bereitstellens einer korrosionsbeständigen Beschichtung, die Folgendes umfasst:

i) ein Harz auf Wasserbasis;
ii) Wasser;
iii) ein oder mehrere Partikel ausgewählt aus der Gruppe umfassend ein anorganisches Partikel, ein Streckmittel und eine Kombination davon; wobei das eine oder die mehreren Partikel eine hydrophobe Beschichtung umfassen, die mindestens ein Organosilan mit der folgenden Formel umfasst:

$$R'_x Si(R)_{4-x}$$

wobei R' eine nichthydrolysierbare aliphatische, cycloaliphatische oder aromatische Gruppe ist, die 8-20 Kohlenstoffatome aufweist; R eine hydrolysierbare Gruppe ausgewählt unter Alkoxy, Halogen, Acetoxy oder Hydroxyl oder Mischungen davon ist; und x = 1 bis 3; und mindestens ein Polysiloxan mit der folgenden Formel:

$$(R_n SiO_{\frac{4-n}{2}})_m$$

wobei R eine organische oder anorganische Gruppe ist; n = 0-3; und m $\geq$ 2;

b. Aufbringens der korrosionsbeständigen Beschichtung auf eine Oberfläche eines Substrats; und
c. Trocknens der korrosionsbeständigen Beschichtung.

**11.** Verfahren nach Anspruch 10, wobei die korrosionsbeständige Beschichtung auf ein Metallsubstrat aufgebracht wird.

**12.** Verfahren nach Anspruch 10, wobei die korrosionsbeständige Beschichtung auf ein Stahlsubstrat aufgebracht wird.

**13.** Verfahren nach Anspruch 10, wobei die korrosionsbeständige Beschichtung auf ein Holzsubstrat aufgebracht wird.

**14.** Verfahren nach Anspruch 10, wobei die korrosionsbeständige Beschichtung auf ein Betonsubstrat aufgebracht wird.

**15.** Verfahren nach Anspruch 10, wobei das eine oder die mehreren Partikel eine Beschichtung aus Siliziumdioxid und Aluminiumoxid zwischen der Partikeloberfläche und der hydrophoben Beschichtung aufweisen.


**Revendications**

**1.** Revêtement résistant à la corrosion comprenant :

a. une résine à base d'eau ;
b. de l'eau ; et
c. une ou plusieurs particules sélectionnées dans le groupe comprenant une particule inorganique, un diluant et une combinaison de ceux-ci ; dans lequel les une ou plusieurs particules comprennent un revêtement hydrophobe comprenant au moins un organosilane présentant la formule :

$$R'_x Si(R)_{4-x}$$

où R' est un groupe aliphatique, cycloaliphatique ou aromatique non hydrolysable ayant 8 à 20 atomes de carbone ; R est un groupe hydrolysable sélectionné parmi le groupe alcoxy, halogéno, acétoxy ou hydroxyle ou des mélanges de ceux-ci ; et x = 1 à 3 ; et au moins un polysiloxane présentant la formule :

$$(R_n SiO_{\frac{4-n}{2}})_m$$

où R est un groupe organique ou inorganique ; n = 0-3 ; et m $\geq$ 2.

2. Revêtement résistant à la corrosion selon la revendication 1, comprenant en outre au moins un solvant.

3. Revêtement résistant à la corrosion selon la revendication 1, dans lequel les une ou plusieurs particules sont du dioxyde de titane.

4. Revêtement résistant à la corrosion selon la revendication 1, où le revêtement résistant à la corrosion a une résistance à la corrosion supérieure à $1 \times 10^7$ Ohms, tel que mesurée par spectroscopie d'impédance électrochimique.

5. Revêtement résistant à la corrosion selon la revendication 1, où le revêtement résistant à la corrosion a une résistance à la corrosion supérieure à $1 \times 10^8$ Ohms, tel que mesurée par spectroscopie d'impédance électronique.

6. Revêtement résistant à la corrosion selon la revendication 1, dans lequel le revêtement hydrophobe réduit la corrosion et la capacité de pénétration de l'eau.

7. Revêtement résistant à la corrosion selon la revendication 2, dans lequel l'au moins un solvant est sélectionné dans le groupe constitué des cétones, alcools, esters et éthers d'alcools, substances aromatiques, éthers et esters de glycol.

8. Revêtement résistant à la corrosion selon l'une quelconque des revendications 1 à 5, dans lequel les une ou plusieurs particules présentent un revêtement d'oxydes métalliques, ou de silice, ou de phosphates, ou de silicates de métal, ou de mélanges de ceux-ci, situé entre la surface des une ou plusieurs particules et le revêtement hydrophobe.

9. Revêtement résistant à la corrosion selon l'une quelconque des revendications 1 à 5, dans lequel les une ou plusieurs particules présentent un revêtement de silice et d'alumine entre la surface de particules et le revêtement hydrophobe.

10. Procédé d'inhibition d'une corrosion d'un substrat comprenant les étapes consistant à :

   a. fournir un revêtement résistant à la corrosion comprenant :

   i) une résine à base d'eau ;
   ii) de l'eau ;
   iii) une ou plusieurs particules sélectionnées dans le groupe comprenant une particule inorganique, un diluant et une combinaison de ceux-ci ; dans lequel les une ou plusieurs particules comprennent un revêtement hydrophobe comprenant au moins un organosilane présentant la formule :

   $$R'_x Si(R)_{4-x}$$

   où R' est un groupe aliphatique, cycloaliphatique ou aromatique non hydrolysable ayant 8 à 20 atomes de carbone ; R est un groupe hydrolysable sélectionné parmi le groupe alcoxy, halogéno, acétoxy ou hydroxyle ou des mélanges de ceux-ci ; et x = 1 à 3 ; et au moins un polysiloxane présentant la formule :

   $$(R_n SiO_{\frac{4-n}{2}})_m$$

   où R est un groupe organique ou inorganique ; n = 0-3 ; et m $\geq$ 2 ;

   b. appliquer le revêtement résistant à la corrosion sur une surface d'un substrat ; et
   c. sécher le revêtement résistant à la corrosion.

11. Procédé selon la revendication 10, dans lequel le revêtement résistant à la corrosion est appliqué sur un substrat métallique.

12. Procédé selon la revendication 10, dans lequel le revêtement résistant à la corrosion est appliqué sur un substrat en acier.

13. Procédé selon la revendication 10, dans lequel le revêtement résistant à la corrosion est appliqué sur un substrat en bois.

**14.** Procédé selon la revendication 10, dans lequel le revêtement résistant à la corrosion est appliqué sur un substrat en béton.

**15.** Procédé selon la revendication 10, dans lequel les une ou plusieurs particules ont un revêtement de silice et d'alumine entre la surface de particules et le revêtement hydrophobe.

Example A

*FIG. 1A*

Example B

*FIG. 1B*

FIG. 2

18

Example D

*FIG. 3B*

Example C

*FIG. 3A*

Example E

*FIG. 4A*

Example F

*FIG. 4B*

*FIG. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008030311 A2
- WO 2008145533 A1
- US 2007027232 A1

**Non-patent literature cited in the description**

- The Pigment Handbook. John Wiley & Sons, 1988, vol. 1
- **C. R. MARTENS**. Emulsion and Water-Soluble Paints and Coatings. Reinhold Publishing Corporation, 1965
- Pigment Handbook. Wiley-Interscience, 1973
- **GEORGE INNES**. *C-209 Additives for Paints*, February 1998